# EUROPÄISCHE PATENTSCHRIFT

(11) **EP 0 771 393 B1**
(45) Veröffentlichungstag und Bekanntmachung des Hinweises auf die Patenterteilung: **09.09.1998**
(21) Anmeldenummer: 96902885.1
(22) Anmeldetag: 23.02.1996
(51) Int. Cl.: F02M 37/10, B60K 15/01, F02M 69/54

(54) **VORRICHTUNG ZUM VERSORGEN EINER BRENNKRAFTMASCHINE MIT KRAFTSTOFF AUS EINEM VORRATSBEHÄLTER**
DEVICE FOR SUPPLYING AN INTERNAL COMBUSTION ENGINE WITH FUEL FROM A TANK
DISPOSITIF PERMETTANT D'ALIMENTER UN MOTEUR A COMBUSTION INTERNE EN CARBURANT PROVENANT D'UN RESERVOIR

(30) Priorität: 09.05.1995 DE 19516890
(43) Veröffentlichungstag der Anmeldung: 07.05.1997
(73) Patentinhaber: ROBERT BOSCH GMBH, 70442 Stuttgart (DE)
(72) Erfinder: SCHWEGLER, Helmut, D-74385 Pleidelsheim (DE); FRANK, Kurt, D-73614 Schorndorf (DE); SEITZ, Ansgar, D-73765 Neuhausen (DE); BÜSER, Wolfgang, D-71691 Freiberg (DE); TALMON, Uwe, D-75417 Mühlacker (DE)
(86) Internationale Anmeldenummer: DE9600284
(87) Internationale Veröffentlichungsnummer: WO9635871

(56) Entgegenhaltungen:
- DE-A- 4 400 213
- DE-A- 4 402 224
- US-A- 5 078 167
- US-A- 5 148 792
- US-A- 5 195 494
- PATENT ABSTRACTS OF JAPAN vol. 011, no. 218 (M-607), 15.Juli 1987 & JP,A,62 035088 (NIPPON DENSO CO LTD), 16.Februar 1987,

## Beschreibung

Die Erfindung geht aus von einer Vorrichtung zum Versorgen einer Brennkraftmaschine mit Kraftstoff aus einem Vorratsbehälter, die durch die US 5 148 792 bekannt ist. Diese Vorrichtung weist eine im Vorratsbehälter angeordnete Förderpumpe auf, die durch eine Öffnung im Vorratsbehälter einführbar ist. Die Öffnung im Vorratsbehälter ist mittels eines Verschlußteils verschließbar, an dem ein Druckregler angeordnet ist. Der Druckregler weist einen Druckraum auf, der eine Verbindung zur Druckseite der Förderpumpe, zur Brennkraftmaschine und zu einer Entlastungsleitung aufweist. Die Verbindung des Druckraums zur Entlastungsleitung ist durch ein federbelastetes Schließglied gesteuert, das mit einem Sitz zusammenwirkt und die Verbindung zur Entlastungsleitung bei Überschreiten eines bestimmten Drucks im Druckraum freigibt. Das Verschlußteil weist dabei einen inneren Körper auf, der kleiner ausgebildet ist als die Öffnung im Vorratsbehälter. Der innere Körper ist mit einer Umhüllung versehen, die zusammen mit dem inneren Körper gegebenenfalls unter Zwischenlage eines Dichtelements die Öffnung verschließt. Im inneren Körper sind Kanäle ausgebildet, die die Verbindungen zur Förderpumpe, zur Brennkraftmaschine und zur Entlastungsleitung bilden. In die die Verbindung zur Förderpumpe und zur Brennkraftmaschine bildenden Kanäle sind als separate Teile Stutzen eingesetzt, auf die Leitungen zur Verbindung mit der Förderpumpe und der Brennkraftmaschine aufgesteckt werden können. Das Schließglied des Druckreglers ist als eine Kugel ausgebildet, die mit einem im inneren Körper des Verschlußteils an einer Querschnittsverengung eines Kanals ausgebildeten Sitz zusammenwirkt. Zur sicheren Abdichtung durch die Kugel muß der Sitz bearbeitet werden, was eine aufwendige Herstellung des inneren Körpers des Verschlußteils bedeutet. Außerdem muß der den Sitz aufweisende innere Körper des Verschlußteils aus Metall hergestellt werden, um eine ausreichende Haltbarkeit des Sitzes zu gewährleisten. Die mehrteilige Ausführung des Verschlußteils mit dem inneren Körper und der Umhüllung bedingt eine aufwendige Herstellung. Schließlich müssen die Stutzen separat in den inneren Körper eingesetzt werden. Insgesamt ist die Ausbildung des Verschlußteils bei dieser bekannten Vorrichtung aufwendig in der Herstellung und Montage, was aus wirtschaftlichen Gründen vermieden werden sollte.

Durch die DE 44 02 224 A1 (Mitglied der Patentfamilie von EP 0 665 372, die zum Stand der Technik gemäß Artikel 54(3) EPÜ gehört,) ist darüberhinaus eine Vorrichtung bekannt, die eine im Vorratsbehälter angeordnete Förderpumpe aufweist, die durch eine Öffnung im Vorratsbehälter einführbar ist. Die Öffnung im Vorratsbehälter ist mittels eines Verschlußteils verschließbar, an dem ein Druckregler angeordnet ist. Der Druckregler weist einen Druckraum auf, der eine Verbindung zur Druckseite der Förderpumpe, zur Brennkraftmaschine und zu einer Entlastungsleitung aufweist. Das Verschlußteil weist dabei einen aus Kunststoff bestehenden, die Öffnung verschließenden flanschartigen Grundkörper auf. Im Grundkörper ist eine Vertiefung gebildet, in die ein die Verbindung des Druckraums zum Entlastungsraum bildender, einstückig mit dem Grundkörper ausgebildeter Stutzen hineinragt. Die Vertiefung des Grundkörpers ist zur Bildung des Druckraums mit einer elastisch verformbaren Membran abgedeckt, die direkt mit dem Stirnende des Stutzens als Sitz zusammenwirkt. Die Membran ist durch eine Feder zum Stutzen hin beaufschlagt und bei Überschreiten einen bestimmten Drucks im Druckraum gibt die Membran den Stutzen zur Verbindung des Druckraums mit dem Entlastungsraum frei. Die Membran ist zwischen dem Grundkörper und einem separaten, am Grundkörper befestigten Halteelement eingespannt. Es wurde festgestellt, daß die Membran beim Öffnen und Schließen des Stutzens sich nicht exakt senkrecht zu diesem bewegt, sondern auf diesem reibt und somit einem Verschleiß unterliegt, so daß die Membran nur eine begrenzte Haltbarkeit aufweist und die Funktion des Druckreglers nicht dauerhaft sichergestellt ist.

### Vorteile der Erfindung

Die erfindungsgemäße Vorrichtung zum Versorgen einer Brennkraftmaschine mit Kraftstoff aus einem Vorratsbehälter mit den Merkmalen gemäß dem Anspruch 1 hat den Vorteil, daß das Verschlußteil einfach ausgebildet ist und die Membran keinem Verschleiß unterliegt und somit der Druckregler eine ausreichende Dauerhaltbarkeit aufweist.

In den abhängigen Ansprüchen sind vorteilhafte Ausgestaltungen und Weiterbildungen der Erfindung angegeben. Durch die einstückige Ausbildung der Anschlußstutzen gemäß Anspruch 5 ist die Herstellung und Montage des Verschlußteils weiter vereinfacht. Durch die Ausbildung gemäß Anspruch 8 ist ein sicherer Halt der Membran und eine einfache Montage aller Teile des Druckreglers in einer Richtung ermöglicht.

### Zeichnung

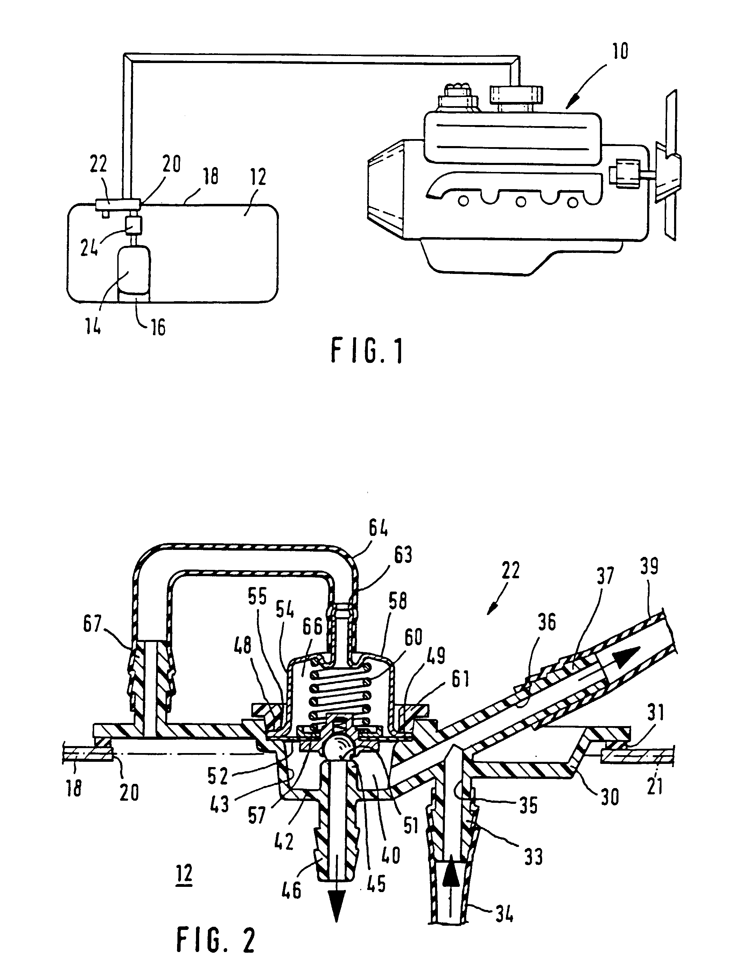

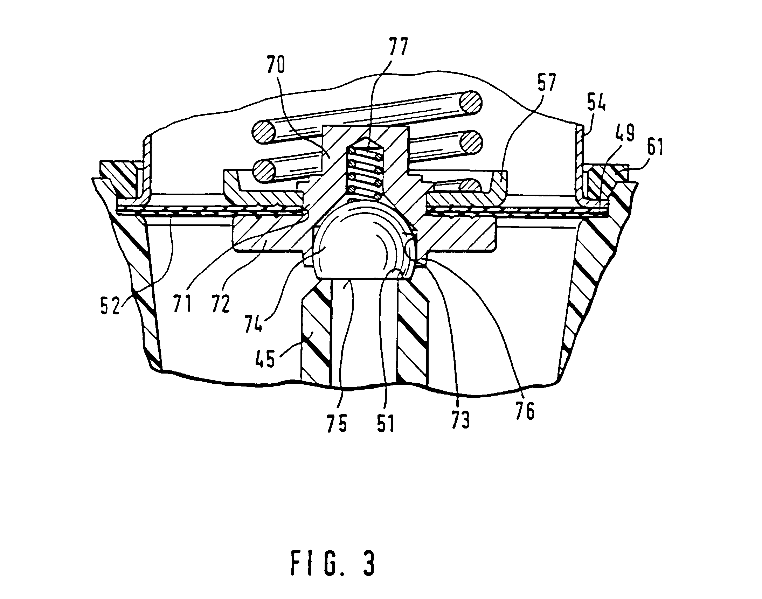

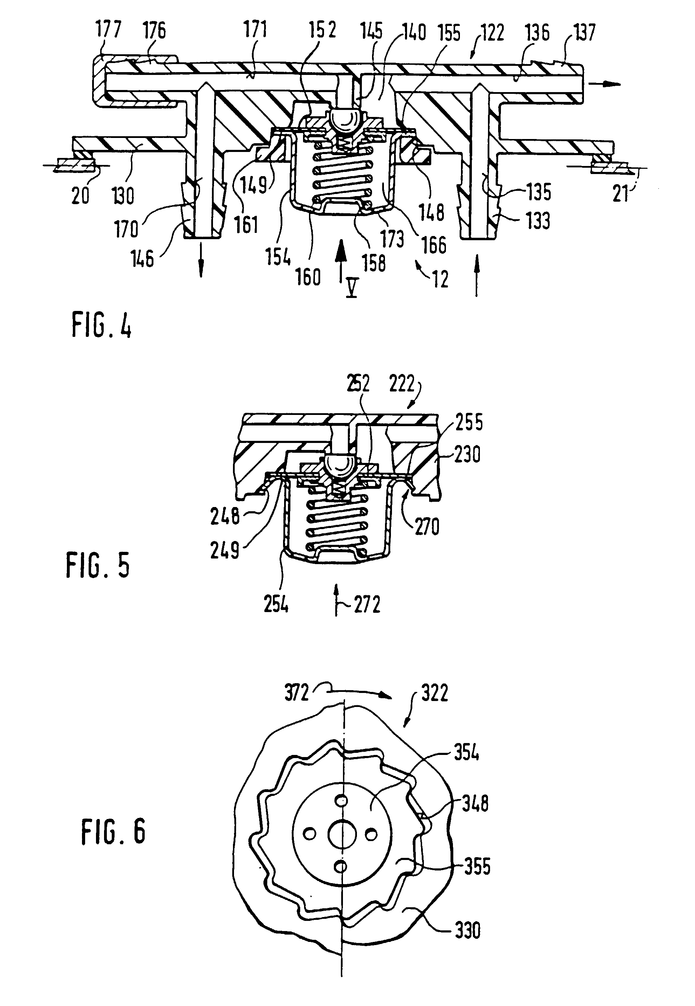

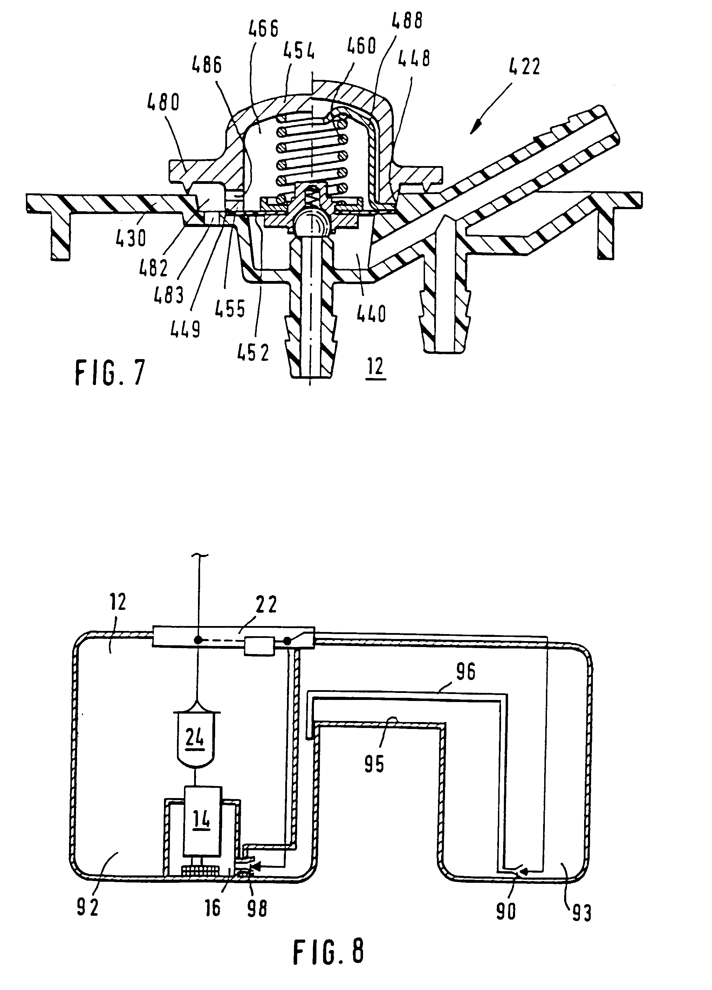

Mehrere Ausführungsbeispiele der Erfindung sind in der Zeichnung dargestellt und in der nachfolgenden Beschreibung näher erläutert. Es zeigen Figur 1 eine Vorrichtung zum Versorgen einer Brennkraftmaschine mit Kraftstoff aus einem Vorratsbehälter, Figur 2 ein Verschlußteil des Vorratsbehälters von Figur 1 in einem Längsschnitt in vergrößerter Darstellung nach einem ersten Ausführungsbeispiel, Figur 3 einen Druckregler des Verschlußteils von Figur 2 in vergrößerter Darstellung, Figur 4 ein zweites Ausführungsbeispiel des Verschlußteils, Figur 5 eine erste Variante der Befestigung eines Halteelements des Verschlußteils von Figur 4, Figur 6 eine zweite Variante der Befestigung des Halteelements in der Ansicht in Pfeilrichtung V in Figur 4, Figur 7 ein drittes Ausführungsbeispiel des Verschlußteils und Figur 8 den Vorratsbehälter der Vorrichtung mit einer zusätzlichen Strahlpumpe.

### Beschreibung der Ausführungsbeispiele

Eine in Figur 1 vereinfacht dargestellte Vorrichtung dient zur Versorgung einer Brennkraftmaschine 10 mit Kraftstoff aus einem Vorratsbehälter 12. Die Vorrichtung weist eine Förderpumpe 14 auf, die im Vorratsbehälter 12 angeordnet ist und dort in nicht dargestellter Weise gehalten ist. Die Förderpumpe 14 kann in beliebiger Weise ausgeführt sein und diese saugt auf ihrer Saugseite Kraftstoff aus einem Reservoir 16 im Vorratsbehälter 12 an. Der Vorratsbehälter 12 weist in einer Wandung 18 eine Öffnung 20 auf, durch die die Förderpumpe 14 eingeführt werden kann. Die Öffnung 20 ist nach dem Einführen der Förderpumpe 14 mit einem Verschlußteil 22 verschließbar, wobei durch das Verschlußteil 22 eine Leitung zur Verbindung der Druckseite der Förderpumpe 14 mit der Brennkraftmaschine 10 geführt ist. In der Verbindung der Druckseite der Förderpumpe 14 mit dem Verschlußteil 22 kann ein Kraftstoffilter 24 angeordnet sein.

In Figur 2 ist ein erstes Ausführungsbeispiel des Verschlußteils 22 dargestellt. Das Verschlußteil 22 weist dabei einen durch Spritzgießen aus Kunststoff hergestellten, flanschartigen Grundkörper 30 auf, der die Öffnung 20 im Vorratsbehälter 12 verdeckt. Zwischen dem Außenrand des Verschlußteils 22 und der Wandung 18 des Vorratsbehälters 12 kann ein Dichtelement 31 angeordnet sein. Das Verschlußteil 22 ist in nicht dargestellter Weise am Vorratsbehälter 12 befestigt. Nachfolgend werden am Verschlußteil 22 Lagebestimmungen angegeben, bei denen eine Anordnung nach innen ins Innere des Vorratsbehälters 12 bedeutet, und eine Anordnung nach außen vom Vorratsbehälters 12 wegweisend bedeutet. Am Grundkörper 30 ist einstückig ein nach innen weisender Anschlußstutzen 33 angeformt, an den eine Leitung 34 zur Verbindung mit der Druckseite der Förderpumpe 14 anschließbar ist. Vom Grundkörper 30 steht außerdem nach außen ein weiterer Anschlußstutzen 37 ab, an den eine Leitung 39 zur Verbindung mit der Brennkraftmaschine 10 anschließbar ist. Die Anschlußstutzen 33 und 37 sind durch im Grundkörper 30 ausgebildete Kanäle 35 und 36 miteinander verbunden, wobei der Kanal 35 des Anschlußstutzens 33 etwa senkrecht zur Ebene 21 verläuft, in der die Öffnung 20 angeordnet ist, und der Kanal 36 des Anschlußstutzens 37 von dieser Ebene 21 weggeneigt verläuft. Der Kanal 36 mündet in einer im Grundkörper 30 etwa zentral ausgebildeten Vertiefung 40, die durch einen Boden 42 des Grundkörpers 30 nach innen und durch einen umlaufenden Rand 43 seitlich begrenzt ist und die nach außen offen ist. Der Kanal 36 mündet am Rand 43 über dem Boden 42 in die Vertiefung 40. Die Vertiefung 40 kann im Querschnitt parallel zur Ebene 21, in der die Öffnung 20 verläuft, rund oder eckig ausgebildet sein. Vom Boden 42 des Grundkörpers 30 aus ragt in die Vertiefung 40, also am Grundkörper 30 nach außen, etwa mittig ein Stutzen 45 hinein und koaxial zu diesem ragt vom Boden 42 nach innen ein Anschlußstutzen 46 hinein, an den eine Leitung angeschlossen werden kann.

Im Grundkörper 30 ist nach außen an die Vertiefung 40 anschließend eine Ausnehmung 48 gebildet, die einen größeren Querschnitt aufweist, als die Vertiefung 40. Am Übergang zwischen der Vertiefung 40 und der Ausnehmung 48 ist ein umlaufender, nach außen weisender ebener Bund 49 gebildet. Das in die Vertiefung 40 ragende Stirnende 51 des Stutzens 45 ist etwa auf gleicher Höhe angeordnet, wie der Bund 49 und im wesentlichen eben ausgebildet. In die Ausnehmung 48 ist von außen her eine elastisch verformbare Membran 52 eingelegt, die mit ihrem Außenrand auf dem Bund 49 aufliegt. Im mittleren Bereich der Membran 52 ist wie in Figur 3 dargestellt ein Trägerteil 70 angeordnet, das einen durch eine Öffnung 71 in der Membran 52 vom Stutzen 45 weg nach oben hindurchtretenden zapfenartigen Abschnitt und an der Unterseite der Membran 52 zum Stutzen 45 hin einen tellerförmigen Abschnitt 72 aufweist. Im Abschnitt 72 ist von unten her zentral eine Bohrung 73 vorhanden, in die eine Kugel 74 mit geringem Spiel eingesetzt ist. Die Kugel 74 ist nur mit einem Teil ihres Umfangs in der Bohrung 73 angeordnet und weist an ihrem aus der Bohrung 73 ragenden Bereich zum Stutzen 45 hin eine Abflachung 75 auf, die über weniger als die Hälfte des Umfangs der Kugel 74 ausgebildet ist. Vom Trägerteil 70 steht nach unten zum Stutzen 45 hin die Bohrung 73 etwa koaxial umgebend ein kragenartiger Rand 76 ab. Der Rand 76 ist über den größten Durchmesser der Kugel 74 nach innen umgebördelt, so daß die Kugel 74 in der Bohrung 73 gelenkig gehalten ist. Zwischen dem nach oben gerichteten Grund der Bohrung 73 und der Kugel 74 ist eine vorgespannte Druckfeder 77 eingespannt, durch die die Kugel 74 nach unten gegen den nach innen gebördelten Rand 76 gedrückt wird. Die Kugel 74 wirkt mit ihrer Abflachung 75 als Ventilglied mit dem Stirnende 51 des Stutzens 45 zusammen. Die Membran 52 bildet zusammen mit dem Trägerteil 70 und der in diesem angeordneten Kugel 74 eine Membranbaugruppe.

In der Ausnehmung 48 ist über der Membran 52 ein topfförmiges Halteelement 54 angeordnet, das mit seinem offenen Stirnende in die Ausnehmung 48 eingesetzt ist und dort einen Flansch 55 aufweist, zwischen dem und dem Bund 49 der Außenrand der Membran 52 dicht eingespannt ist. Auf der nach außen weisenden Seite der Membran 52 liegt in deren mittlerem Bereich ein Federteller 57 auf, zwischen dem und dem Boden 58 des Halteelements 54 eine Druckfeder 60 eingespannt ist. Das Halteelement 54 kann beispielsweise als ein Blechteil ausgebildet sein. Über das Halteelement 54 ist als Befestigungselement ein aus Kunststoff bestehender Ring 61 geschoben, der in die Ausnehmung 48 eingesetzt ist, an der nach außen weisenden Seite des Flansches 55 angreift und am Grundkörper 30 befestigt ist. Durch den Ring 61 wird das Halteelement 54 am Grundkörper 30 fixiert. Der Ring 61 kann zu dessen Befestigung beispielsweise mit dem Grundkörper 30 verschweißt, vorzugsweise mittels Ultraschall- oder Reibschweißung, oder verklebt werden oder auf andere Weise am Grundkörper 30 befestigt sein. Vom Boden 58 des Halteelements 54 ragt ein Anschlußstutzen 63 nach außen, auf den ein Ende einer Leitung 64, beispielsweise eines Schlauchs, aufschiebbar ist, durch die der durch das Halteelement 54 und die Membran 52 begrenzte Raum 66, in dem die Druckfeder 60 angeordnet ist, mit der Atmosphäre verbindbar ist. Der Grundkörper 30 weist einen weiteren nach außen abstehenden Anschlußstutzen 67 auf, der nach innen offen ist und auf den das andere Ende der Leitung 64 aufgeschoben ist. Der Raum 66 ist somit mit dem Inneren des Vorratsbehälters 12 verbunden, in dem Atmosphärendruck herrscht und es ist sichergestellt, daß in den Raum 66 keine Fremdkörper eindringen können, wie beispielsweise Schmutz oder Wasser. Außerdem ist dadurch sichergestellt, daß möglicherweise durch die Membran 52 in den Raum 66 eindiffundierter Kraftstoffdampf nicht in die Umgebung austreten kann, sondern wieder in den Vorratsbehälter 12 zurückgeführt wird.

Die Vertiefung 40 bildet zusammen mit der Membran 52 einen abgeschlossenen Druckraum, der über den Kanal 36 mit der Druckseite der Förderpumpe 14 und mit der Brennkraftmaschine 10 verbunden ist. Der Druckraum ist außerdem über den Stutzen 45 mit einem Entlastungsraum verbindbar, der bei diesem Ausführungsbeispiel der Vorratsbehälter 12 ist, in den der Anschlußstutzen 46 mündet. Durch die Vorspannung der Druckfeder 60 wird die Kugel 74 mit ihrer Abflachung 75 auf das Stirnende 51 des Stutzens 45 gedrückt und verschließt diesen, solange der im Druckraum herrschende Druck eine geringere Kraft auf die Membran 52 ausübt als die Druckfeder 60. Überschreitet der Druck im Druckraum einen bestimmten, durch die Vorspannung der Druckfeder 60 bestimmten Wert, so wird die Membran 52 und mit dieser die Kugel 74 vom Stirnende 51 abgehoben und gibt den Stutzen 45 frei, so daß aus dem Druckraum Kraftstoff in den als Entlastungsraum dienenden Vorratsbehälter 12 zurückfließen kann. Die Membran 52 wird dabei nicht exakt geradlinig bewegt, was jedoch durch die Kugel 74 ausgeglichen wird, die in der Bohrung 73 schwenkbar ist und immer mit ihrer Abflachung 75 auf dem Stirnende 51 des Stutzens 45 aufliegt. Solange die Membran 52 nur einseitig um einen kleinen Weg nach oben durchgedrückt ist, bleibt die Kugel 74 mit ihrer Abflachung 75 auf dem Stirnende 51 des Stutzens 45 aufliegend, wobei die einseitige Anhebung der Membran 52 durch eine Schwenkung der Kugel 74 in der Bohrung 73 ausgeglichen wird.

Der vorstehend beschriebene Aufbau stellt einen Druckregler dar, der am Verschlußteil 22 angeordnet ist, wobei die Membran 52 mit der Kugel 74 als Schließglied dient, das mit dem Stirnende 51 des Stutzens 45 als Sitz zusammenwirkt. Der Aufbau des Verschlußteils 22 und des Druckreglers ist dabei sehr einfach und die Montage der den Druckregler bildenden Bauteile ist in einer Richtung von außen her möglich. Die Vorrichtung braucht nur eine Leitung zur Verbindung mit der Brennkraftmaschine 10 aufzuweisen, eine Rückströmleitung ist nicht erforderlich, da überschüssiger Kraftstoff bereits im Druckregler in den Entlastungsraum abströmen kann.

In Figur 4 ist ein zweites Ausführungsbeispiel des Verschlußteils 122 dargestellt, bei dem gleiche oder ähnliche Teile wie beim ersten Ausführungsbeispiel mit um 100 erhöhten Bezugszahlen versehen sind. Das Verschlußteil 122 weist den durch Spritzgießen aus Kunststoff hergestellten, die Öffnung 20 verschließenden Grundkörper 130 auf. Vom Grundkörper 130 steht nach innen der Anschlußstutzen 133 zur Verbindung mit der Druckseite der Förderpumpe 14 ab und nach außen steht der Anschlußstutzen 137 zur Verbindung mit der Brennkraftmaschine 10 ab. Die beiden Anschlußstutzen 133 und 137 sind durch die im Grundkörper 130 ausgebildeten Kanäle 135 und 136 miteinander verbunden. Der Kanal 135 des Anschlußstutzens 133 verläuft etwa senkrecht zur Ebene 21, in der die Öffnung 20 angeordnet ist, und der Kanal 136 des Anschlußstutzens 137 verläuft etwa parallel zu dieser Ebene 21 außerhalb des Vorratsbehälters 12. Weiterhin steht vom Grundkörper 130 nach innen ein Anschlußstutzen 146 ab, der über einen etwa senkrecht zur Ebene 21, in der die Öffnung 20 angeordnet ist, verlaufenden Kanal 170 und einen weiteren etwa parallel zu dieser Ebene verlaufenden Kanal 171 mit dem nach innen in die Vertiefung 140 ragenden Stutzen 145 verbunden ist. Die Vertiefung 140 ist umgekehrt wie beim ersten Ausführungsbeispiel angeordnet, so daß sie nach innen, das heißt in den Vorratsbehälter 12 offen ist. An die Vertiefung 140 nach innen anschließend ist wie beim ersten Ausführungsbeispiel die Ausnehmung 148 am Grundkörper 130 ausgebildet. Am nach innen weisenden Bund 149 ist die Membran 152 mit ihrem Außenrand aufgelegt und mittels des Halteelements 154 fixiert, das wiederum mittels des Rings 161 am Grundkörper 130 befestigt ist. Das Halteelement 154 ist wie beim ersten Ausführungsbeispiel topfförmig ausgebildet und mit seinem Flansch 155 in der Ausnehmung 148 angeordnet, zwischen dem und dem Bund 149 der Außenrand der Membran 152 eingespannt ist. Zwischen dem Boden 158 des Halteelements 154 und dem mittleren Bereich der Membran 152 ist die vorgespannte Druckfeder 160 angeordnet. Im Boden 158 ist zumindest eine Öffnung 173 ausgebildet, durch die der im Halteelement 154 begrenzte Raum 166 mit dem Inneren des Vorratsbehälters 12 verbunden ist. Bei dieser Ausführung ist keine separate Leitung erforderlich, um den Raum 166 mit dem Vorratsbehälter 12 zu verbinden. Der Kanal 136 kann in einem außerhalb des Vorratsbehälters 12 angeordneten Anschlußstutzen 176 münden, der mittels eines Deckels 177 verschließbar ist, so daß ein Abfließen von Kraftstoff aus dem Druckraum über den Anschlußstutzen 146 in den Vorratsbehälter 12 erfolgt, oder auf den Anschlußstutzen 176 kann eine Leitung aufgeschoben werden, so daß der aus dem Druckraum abfließende Kraftstoff für andere Zwecke genutzt werden kann, wobei dann der Anschlußstutzen 146 mittels eines Deckels verschlossen ist. Die Membran 152 weist wie beim ersten Ausführungsbeispiel die Membranbaugruppe mit dem Trägerteil 70 und der in diesem gelenkig aufgenommenen Kugel 74 auf, wobei das Trägerteil 70 jedoch so angeordnet ist, daß dessen tellerförmiger Abschnitt 72 zum Stutzen 145 nach oben weisend angeordnet ist.

In Figur 5 ist eine Variante des Verschlußteils 222 mit einer modifizierten Befestigung des Halteelements 254 dargestellt, bei der das Halteelement 254 direkt am Grundkörper 230 in der Ausnehmung 248 befestigt ist und der Ring 61 bzw. 161 nicht erforderlich ist. Der Grundkörper 230 ist im wesentlichen wie beim zweiten Ausführungsbeispiel beschrieben ausgebildet. Das Halteelement 254 ist ebenfalls im wesentlichen wie vorstehend zum ersten oder zweiten Ausführungsbeispiel beschrieben als ein Blechteil ausgebildet und weist den Flansch 255 auf, zwischen dem und dem Bund 249 der Außenrand der Membran 252 eingespannt ist. Aus dem in der Ausnehmung 248 angeordneten Bereich des Halteelements 254 ist wenigstens ein Haken 270 ausgestellt, der in nicht eingesetztem Zustand des Halteelements 254 über die Ausnehmung 248 seitlich hinausragt und quer zur Einsetzrichtung des Halteelements 254 gemäß Pfeil 272 federnd nach innen, das heißt zum Halteelement 254 hin schwenkbar ist. Das freie Ende des Hakens 270 weist nach außen, also entgegen Einsetzrichtung 272. Beim Einsetzen des Halteelements 254 in die Ausnehmung 248 schwenkt der Haken 270 federnd nach innen und tritt in die Ausnehmung 248 ein. Das Halteelement 254 wird in die Ausnehmung 248 hineingedrückt, so daß die Membran 252 eingespannt wird. Dabei verkrallt sich das Ende des Hakens 270 am Rand der Ausnehmung 248, wodurch das Halteelement 254 fixiert wird. Bei einer auf das Halteelement 254 entgegen Einsetzrichtung 272 wirkenden Kraft verkrallt sich das ende des Hakens 270 widerhakenartig in der Ausnehmung 248. Da das Halteelement 254 aus Blech besteht und der Grundkörper 230 aus Kunststoff, kann das Ende des Hakens 270 unter plastischer Verformung des Grundkörpers 230 in den Rand der Ausnehmung 254 eindringen. Vorzugsweise sind über den Umfang des Halteelements 254 verteilt mehrere Haken 270 vorgesehen. Die Membranbaugruppe ist gegenüber der Ausführung gemäß Figur 4 unverändert.

In Figur 6 ist eine zweite Variante des Verschlußteils 322 mit einer weiteren modifizierten Befestigung des Halteelements 354 dargestellt, bei der das Halteelement 354 ebenfalls direkt am Grundkörper 330 befestigt ist, der im wesentlichen wie beim zweiten Ausführungsbeispiel beschrieben ausgebildet ist. Das Halteelement 354 ist wie beim ersten oder zweiten Ausführungsbeispiel beschrieben als ein Blechteil ausgebildet, weist also den in der Ausnehmung 348 angeordneten Flansch 355 auf, zwischen dem und dem Bund der Außenrand der Membran eingespannt ist. Der Außenrand des Flansches 355 und die Ausnehmung 348 sind im wesentlichen kreisförmig ausgebildet. Der Außenrand des Flansches 355 ist über seinen Umfang sägezahnförmig ausgebildet und der Innenrand der Ausnehmung 348 ist über seinen Umfang mit einem entsprechenden sägezahnförmigen Gegenprofil versehen. Das Halteelement 354 ist in die Ausnehmung 348 in einer in Figur 5 in der linken Hälfte dargestellten Drehstellung einsetzbar, in der die Sägezähne von dessen Flansch 355 auf die entsprechenden Lücken am Innenrand der Ausnehmung 348 treffen. Das Halteelement 354 wird in die Ausnehmung 348 hineingedrückt, damit die Membran 352 sicher eingespannt wird, und gleichzeitig in Richtung des Pfeils 372 verdreht, so daß die Sägezähne von dessen Flansch 355 auf die Sägezähne des Innenrands der Ausnehmung 348 treffen, wie dies in der echten Hälfte der Figur 5 dargestellt ist. Dabei dringen die Sägezähne des Flansches 355 unter plastischer Verformung des Grundkörpers 330 in den Innenrand der Ausnehmung 348 ein, wodurch das Halteelement 354 am Grundkörper 330 befestigt ist.

In Figur 7 ist in der linken Hälfte eine Variante des Verschlußteils 422 mit einem modifizierten Halteelement 454 dargestellt. Der Grundkörper 430 des Verschlußteils 422 und das Halteelement sind dabei im wesentlichen so ausgebildet wie beim ersten Ausführungsbeispiel gemäß Figur 2 beschrieben. Das Halteelement 454 besteht aus Kunststoff, ist topfförmig ausgebildet und weist mit seinem offenen Stirnende zum Grundkörper 430. Das Halteelement 454 weist den Flansch 455 auf, mit dem es in der Ausnehmung 448 angeordnet ist und zwischen dem und dem Bund 449 der Außenrand der Membran 452 eingespannt ist. Das Halteelement 454 weist außerdem einen über die Ausnehmung 448 seitlich umlaufend hinausragenden Kragen 480 auf und die Ausnehmung 448 weist zumindest an einer Stelle ihres Umfangs eine Ausbuchtung 482 auf, die über eine Öffnung 483 im Grundkörper 430 mit dem Inneren des Vorratsbehälters 12 verbunden ist. Im Halteelement 454 ist eine Öffnung 486 vorhanden, durch die der der Vertiefung 440 an der Membran 452 gegenüberliegende Raum 466 des Halteelements 454, in dem die Druckfeder 460 angeordnet ist, mit der Ausbuchtung 482 verbunden ist. Durch die Ausbuchtung 482 und den diese überdeckenden Kragen 480 und den Flansch 455 des Halteelements 454 ist ein Raum begrenzt, über den der Raum 466 mit der Atmosphäre, das heißt mit dem Inneren des Vorratsbehälters 12 verbunden ist. Bei der vorstehend beschriebenen Ausbildung kann auch, wie in der rechten Hälfte von Figur 6 dargestellt, innerhalb des Halteelements 454 noch zusätzlich ein Abstützteil 488 aus Blech für die Druckfeder 460 angeordnet werden, das einen in der Ausnehmung 448 angeordneten Flansch aufweist, zwischen dem und dem Bund 449 der Außenrand der Membran 452 eingespannt ist, wobei das Halteelement 454 mit seinem Flansch 455 auf den Flansch des Abstützteils 488 drückt und dieses hält. Wenn das Abstützteil ebenfalls topfförmig ausgebildet ist, so weist dieses ebenfalls eine Öffnung zur Verbindung des innerhalb des Abstützteils 488 gebildeten Raums 466 mit der Ausbuchtung 482 der Ausnehmung 448 auf.

In Figur 8 ist eine modifizierte Ausführung der gesamten Vorrichtung dargestellt, die prinzipiell wie vorstehend beschrieben ausgebildet ist. Der den Druckraum mit einem Entlastungsraum verbindende Anschlußstutzen 46 bzw. 146 des Grundkörpers ist dabei mit wenigstens einer Strahlpumpe 90 verbunden, die Kraftstoff in das Reservoir 16 fördert, aus dem die Förderpumpe 14 ansaugt. Dies ist insbesondere bei zerklüfteten Vorratsbehältern 12 vorteilhaft, die mehrere Teile 92,93 aufweisen, deren Böden durch erhöhte Höcker oder Sattel 95 voneinander getrennt sind, so daß Kraftstoff nicht zwischen diesen Teilen 92,93 fließen kann. Die Strahlpumpe 90 ist in einem vom Teil 92, in dem die Förderpumpe 14 angeordnet ist, getrennten Teil 93 angeordnet und fördert über den Höcker 95 durch eine Leitung 96 in den Teil 92. Außerdem kann auch im Teil 92 eine Strahlpumpe 98 angeordnet sein, durch die Kraftstoff in einen als Reservoir 16 für die Förderpumpe 14 dienenden Topf gefördert wird.

## Patentansprüche

1. Vorrichtung zum Versorgen einer Brennkraftmaschine mit Kraftstoff aus einem Vorratsbehälter mit einer im Vorratsbehälter (12) angeordneten Förderpumpe (14), die durch eine Öffnung (20) im Vorratsbehälter (12) einführbar ist, mit einem Verschlußteil zum Verschließen der Öffnung (20), an dem ein Druckregler angeordnet ist, der einen Druckraum (40;140;440) mit einer Verbindung zur Druckseite der Förderpumpe (14), zur Brennkraftmaschine (10) und zu einem Entlastungsraum (12;90;98) aufweist, wobei das Verschlußteil einen aus Kunststoff bestehenden, die Öffnung (20) verschließenden flanschartigen Grundkörper (30;130;230; 330;430) aufweist, in dem eine Vertiefung (40;140; 440) gebildet ist, in die ein die Verbindung des Druckraums zum Entlastungsraum (12; 90;98) bildender, einstückig mit dem Grundkörper (30;130;230; 330;430) ausgebildeter Stutzen (45;145) hineinragt, wobei die Vertiefung (40;140;440) zur Bildung des Druckraums mit einer elastisch verformbaren Membran (52;152;252;452) abgedeckt ist, die zumindest mittelbar mit dem Stirnende (51) des Stutzens (45;145) als Sitz zusammenwirkt, wobei die Membran (52;152;252; 452) durch eine Feder (60;160;460) zum Stutzen (45;145) hin beaufschlagt ist und bei Überschreiten eines bestimmten Drucks im Druckraum (40;140;440) den Stutzen (45;145) zur Verbindung des Druckraums (40;140;440) mit dem Entlastungsraum (12;90;98) freigibt, wobei die Membran (52;152; 252;452) zwischen dem Grundkörper (30;130;230;330;430) und einem separaten, am Grundkörper befestigten Halteelement (54;154;254;354; 454) eingespannt ist, wobei mit der Membran (52;152;252;452) ein Trägerteil (70) verbunden ist, in dem eine abgeflachte Kugel (74) schwenkbar gelagert ist und wobei die Kugel (74) mit ihrer Abflachung (75) als Schließglied mit dem Stirnende (51) des Stutzens (45) zusammenwirkt.

2. Vorrichtung nach Anspruch 1, dadurch gekennzeichnet, daß das Trägerteil (70) dem Stutzen (45) zugewandt eine Bohrung (73) aufweist, in die die Kugel (74) mit ihrem kugeligen Bereich eingesetzt ist und daß der die Bohrung (73) umgebende Rand (76) über die Kugel (74) umgebördelt ist.

3. Vorrichtung nach Anspruch 2, dadurch gekennzeichnet, daß der die Öffnung (73) umgebende Rand (76) kragenartig vom Trägerteil (70) hervorsteht.

4. Vorrichtung nach einem der vorstehenden Ansprüche, dadurch gekennzeichnet, daß im Trägerteil (70) eine Feder (77) eingespannt ist, durch die die Kugel (74) zum Stutzen (45) hin beaufschlagt ist.

5. Vorrichtung nach einem der vorstehenden Ansprüche, dadurch gekennzeichnet, daß am Grundkörper (30;130;230;330;430) einstückig wenigstens ein Anschlußstutzen (33;37;46;133;137;146;176) angeformt ist, an den eine Leitung zur Verbindung mit der Druckseite der Förderpumpe (14) und/oder der Brennkraftmaschine (10) und/oder dem Entlastungsraum (12;90;98) anschließbar ist.

6. Vorrichtung nach einem der vorstehenden Ansprüche, dadurch gekennzeichnet, daß zwischen dem Halteelement (54;154;254;354;454) und der Membran (52;152;252;452) eine Schließfeder (60;160;460) eingespannt ist, durch die die Kugel (74) mit ihrer Abflachung (75) gegen das Stirnende (51) des Stutzens (45;145) gedrückt wird.

7. Vorrichtung nach einem der vorstehenden Ansprüche, dadurch gekennzeichnet, daß das Halteelement (54;154;254;354;454) topfförmig ausgebildet ist und an seinem zum Grundkörper (30;130;230;330;430) weisenden offenen Stirnende einen Flansch (55;155;255;355;455) aufweist, zwischen dem und dem Grundkörper der Rand der Membran (52;152;252;452) eingespannt ist.

8. Vorrichtung nach einem der vorstehenden Ansprüche, dadurch gekennzeichnet, daß der Grundkörper (30;130;230;330;430) an die Vertiefung anschließend eine Ausnehmung (48;148;248;348;448) mit größerem Querschnitt als die Vertiefung (40;140;240;340;440) aufweist, daß am Übergang zwischen der Vertiefung und der Ausnehmung ein von der Vertiefung wegweisender umlaufender Bund (49;149;249;449) gebildet ist, an dem die Membran (52;152;252;452) mit ihrem Rand anliegt, und daß das Halteelement (54;154;254;354;454) mit seinem Flansch (55;155;255;355;455) in die Ausnehmung eingesetzt ist.

9. Vorrichtung nach Anspruch 8, dadurch gekennzeichnet, daß das Halteelement (254) als ein Blechteil ausgebildet ist und daß an dessen in der Ausnehmung (248) angeordnetem Bereich wenigstens ein quer zur Einsetzrichtung (272) des Halteelements (254) elastisch schwenkbarer Haken (270) ausgestellt ist, der sich am Rand der Ausnehmung (248) verkrallt und dadurch das Halteelement (254) am Grundkörper (230) fixiert.

10. Vorrichtung nach Anspruch 8, dadurch gekennzeichnet, daß das Halteelement (354) als ein Blechteil ausgebildet ist und dessen Flansch (355) über seinen Umfang sägezahnartig gebildet ist, daß der Rand der Ausnehmung mit einem entsprechenden sägezahnartigen Gegenprofil ausgebildet ist, daß das Halteelement (354) in einer Drehstellung in die Ausnehmung (348) einsetzbar ist und daß durch Drehen des Halteelements (348) dessen Flansch (355) in den Rand der Ausnehmung (348) quer zur Einsetzrichtung des Halteelements unter plastischer Verformung des Grundkörpers (330) eingreift und dadurch das Halteelement (354) am Grundkörper (330) fixiert.

11. Vorrichtung nach einem der Ansprüche 8 bis 10, dadurch gekennzeichnet, daß der der Vertiefung (440) gegenüberliegende Raum (466) der Membran (452) mit einem zwischen dem Halteelement (454) und dem Grundkörper (430) begrenzten Raum (482) verbunden ist, der wiederum über eine Öffnung (486) im Grundkörper (430) mit dem Vorratsbehälter (12) verbunden ist.

## Claims

1. Device for supplying an internal combustion engine with fuel from a tank, with a feed pump (14) which is arranged in the tank (12) and which can be introduced through an orifice (20) in the tank (12), and with a closure part for closing the orifice (20), on which closure part is arranged a pressure regulator which has a pressure space (40; 140; 440) with a connection to the delivery side of the feed pump (14), to the internal combustion engine (10) and to a relief space (12; 90; 98), the closure part having a flange-like basic body (30; 130; 230; 330; 430) which consists of plastic, closes the orifice (20) and in which there is formed a depression (40; 140; 440), into which projects a nipple (45; 145) forming the connection of the pressure space to the relief space (12; 90; 98) and made in one piece with the basic body (30; 130; 230; 330; 430), the depression (40; 140; 440) for forming the pressure space being covered with an elastically deformable diaphragm (52; 152; 252; 452) which at least indirectly cooperates as a seat with the end face (51) of the nipple (45; 145), the diaphragm (52; 152; 252; 452) being forced towards the nipple (45; 145) by a spring (60; 160; 460) and when a specific pressure is exceeded in the pressure space (40; 140; 440) opening the nipple (45; 145) for connection of the pressure space (40; 140; 440) to the relief space (12; 90; 98), the diaphragm (52; 152; 252; 452) being clamped between the basic body (30; 130; 230; 330; 430) and a separate holding element (54; 154; 254; 354; 454) fastened to the basic body there being connected to the diaphragm (52; 152; 252; 452) a carrier part (70) in which a flattened ball (74) is mounted pivotably, and the ball (74), with its flattened portion (75) as closing member, cooperating with the end face (51) of the nipple (45).

2. Device according to Claim 1, characterized in that the carrier part (70) has, facing the nipple (45), a bore (73) into which the ball (74) is inserted by its spherical region, and in that the edge (76) surrounding the bore (73) is flanged over the ball (74).

3. Device according to Claim 2, characterized in that the edge (76) surrounding the orifice (73) projects from the carrier part (70) like a collar.

4. Device according to one of the preceding claims, characterized in that there is clamped in the carrier part (70) a spring (77), by means of which the ball (74) is forced towards the nipple (45).

5. Device according to one of the preceding claims, characterized in that there is formed in one piece on the basic body (30; 130; 230; 330; 430) at least one connection piece (33; 37; 46; 133; 137; 146; 176), to which a conduit for connection to the delivery side of the feed pump (14) and/or the internal combustion engine (10) and/or the relief space (12; 90; 98) can be connected.

6. Device according to one of the preceding claims, characterized in that a closing spring (60; 160; 460), by which the ball (74) is pressed by its flattened portion (75) against the end face (51) of the nipple (45; 145), is clamped between the holding element (54; 154; 254; 354; 454) and the diaphragm (52; 152; 252; 452).

7. Device according to one of the preceding claims characterized in that the holding element (54; 154; 254; 354; 454) is of pot-shaped design and, on its open end face confronting the basic body (30; 130; 230; 330; 430), has a flange (55; 155; 255; 355; 455), between which and the basic body the edge of the diaphragm (52; 152; 252; 452) is clamped.

8. Device according to one of the preceding claims, characterized in that the basic body (30; 130; 230; 330; 430) has, adjoining the depression, a recess (48; 148; 248; 348; 448) having a larger cross-section than the depression (40; 140; 240; 340; 440), in that there is formed at the transition between the depression and the recess a continuous collar (49; 149; 249; 449) which faces away from the depression and on which the diaphragm (52; 152; 252; 452) bears with its edge, and in that the holding element (54; 154; 254; 354; 454) is inserted with its flange (55; 155; 255; 355; 455) into the recess.

9. Device according to Claim 8, characterized in that the holding element (254) is designed as a sheet-metal part, and in that there is, shaped out on the region of the latter arranged in the recess (248), at least one hook (270) which is elastically pivotable transversely relative to the direction of insertion (272) of the holding element (254) and which catches on the edge of the recess (248) and thereby fixes the holding element (254) on the basic body (230).

10. Device according to Claim 8, characterized in that the holding element (354) is designed as a sheet-metal part and its flange (355) is formed in a sawtooth-like manner over its circumference, in that the edge of the recess is designed with a corresponding sawtooth-like counter-profile, in that the holding element (354) can be inserted in a rotary position into the recess (348), and in that, as a result of the rotation of the holding element (354), its flange (355) engages into the edge of the recess (348) transversely relative to the direction of insertion of the holding element, the basic body (330) at the same time experiencing plastic deformation, and thereby fixes the holding element (354) on the basic body (330).

11. Device according to one of Claims 8 to 10, characterized in that that space (466) of the diaphragm (452) which is located opposite the depression (440) is connected to a space (482) which is delimited between the holding element (454) and the basic body (430) and which is itself connected to the tank (12) via an orifice (486) in the basic body (430).

## Revendications

1. Dispositif pour alimenter un moteur à combustion interne en carburant à partir d'un réservoir, comprenant
- une pompe de transfert (14) placée dans le réservoir (12) et introduite dans celui-ci à travers une ouverture (20) du réservoir (12),
- une pièce d'obturation pour fermer l'ouverture (20), comportant un régulateur de pression ayant une chambre de pression (40 ; 140 ; 440) avec une liaison vers le côté de pression de la pompe de transfert (14), vers le moteur à combustion interne (10) et vers une chambre de décharge (12 ; 90 ; 98),
- la pièce d'obturation ayant un corps de base (30 ; 130 ; 230 ; 330 ; 430) en forme de bride, en matière plastique fermant l'ouverture (20), avec une cavité (40 ; 140 ; 440) dans laquelle pénètre un ajutage (45 ; 145) réalisé en une seule pièce avec le corps de base (30 ; 130 ; 230 ; 330 ; 430) formant la liaison entre la chambre de pression et la chambre de décharge (12 ; 90 ; 98),
- la cavité (40 ; 140 ; 440) étant recouverte d'une membrane (52 ; 152 ; 252 ; 452) déformable élastiquement pour former la chambre de pression, cette membrane coopérant au moins indirectement avec l'extrémité frontale (51) de la l'ajutage (45 ; 145) formant un siège,
- la membrane (52 ; 152 ; 252 ; 452) étant sollicitée par un ressort (60 ; 160 ; 460) vers l'ajutage (45 ; 145) et en cas de dépassement d'une certaine pression dans la chambre de pression (40 ; 140 ; 440), l'ajutage (45 ; 145) est libéré pour relier la chambre de pression (40 ; 140 ; 440) à la chambre de décharge (12 ; 90 ; 98),
- la membrane (52 ; 152 ; 252 ; 452) étant serrée entre le corps de base (30 ; 130 ; 230 ; 330 ; 430) et un élément de fixation (54 ; 154 254 ; 354 ; 454) distinct, fixé au corps de base,
- une pièce de support (70) étant reliée à la membrane (52 ; 152 ; 252 ; 452), pièce recevant en pivotement une bille (74) aplatie et
- la bille (74) coopère avec sa partie aplatie (75) comme organe d'obturation avec l'extrémité frontale (51) de l'ajutage (45).

2. Dispositif selon la revendication 1,
caractérisé en ce que
la partie de support (70) comporte un perçage (73) tourné vers l'ajutage (45) recevant la bille (74) avec sa partie sphérique et
le bord (76) qui entoure le perçage (73) est rabattu pardessus la bille (74).

3. Dispositif selon la revendication 2,
caractérisé en ce que
le bord (76) qui entoure l'ouverture (73) vient en saillie en forme de collerette par rapport à la pièce de support (70).

4. Dispositif selon l'une quelconque des revendications précédentes,
caractérisé par
un ressort (77) serré dans la pièce de support (70) qui sollicite la bille (74) vers l'ajutage (45).

5. Dispositif selon l'une quelconque des revendications précédentes,
caractérisé en ce que
le corps de base (30 ; 130 ; 230 ; 330 ; 430) comporte en une seule pièce au moins un ajutage (33 ; 77 ; 46 ; 133 ; 137 ; 146 ; 176) auquel on peut relier une conduite pour la liaison avec le côté de pression de la pompe de transfert (14) et/ou le moteur à combustion interne (10) et/ou la chambre de décharge (12 ; 90 ; 98).

6. Dispositif selon l'une quelconque des revendications précédentes,
caractérisé en ce qu'
entre l'élément de fixation (54 ; 154 ; 254 ; 354 ; 454) et la membrane (52 ; 152 ; 252 ; 452) on a serré un ressort d'obturation (60 ; 160 ; 460) qui pousse la bille (74) avec sa partie aplatie (75) contre l'extrémité frontale (51) de l'ajutage (45 ; 145).

7. Dispositif selon l'une quelconque des revendications précédentes,
caractérisé en ce que
l'élément de fixation (54 ; 154 ; 254 ; 354 ; 454) est en forme de pot et comporte à son extrémité frontale ouverte tournée vers le corps de base (30 ; 130 ; 230 ; 330 ; 430) une bride (55 ; 155 ; 255 ; 355 ; 455) pour serrer le bord de la membrane (52 ; 152 ; 252 ; 452) contre le corps de base.

8. Dispositif selon l'une quelconque des revendications précédentes,
caractérisé en ce que
le corps de base (30 ; 130 ; 230 ; 330 ; 430) comporte de manière adjacente à la cavité, une cavité (48 ; 148 ; 248 ; 348 ; 448) de section plus grande que l'autre cavité (40 ; 140 ; 240 ; 340 ; 440),
et au passage entre la première et la seconde cavité il se forme un épaulement périphérique (49 ; 149 ; 249 ; 449) tourné dans la direction opposée, et contre lequel s'applique le bord de la membrane (52 ; 152 ; 252 ; 452) et l'élément de fixation (54 ; 154 ; 254 ; 354 ; 454) est placé avec sa bride (55 ; 155 ; 255 ; 355 ; 455) dans la cavité.

9. Dispositif selon la revendication 8,
caractérisé en ce que
l'élément de fixation (254) est une pièce en tôle et sa zone logée dans la cavité (248) comporte au moins un crochet pivotant (270) élastique qui peut se déployer transversalement à la direction de mise en place (272) de l'élément de fixation (254), ce crochet s'accrochant au bord de la cavité (248) et étant fixé au corps de base (230) par l'élément de fixation (254).

10. Dispositif selon la revendication 8,
caractérisé en ce que
l'élément de fixation (354) est une pièce en tôle et sa bride (355) a une périphérie en forme de dents de scie, le bord de la cavité présente un contre-profil en dents de scie correspondant,
l'élément de fixation (354) se place dans la cavité (348) dans une certaine position de rotation et en tournant l'élément de fixation (348) sa bride (355) pénètre dans le bord de la cavité (348) transversalement à la direction de mise en place de l'élément de fixation avec déformation plastique du corps de base (330) en bloquant ainsi l'élément de fixation (354) au corps de base (330).

11. Dispositif selon l'une quelconque des revendications 8 à 10,
caractérisé en ce que
la cavité (466), au regard de la cavité (440) de la membrane (452), est reliée à un volume (482) délimité entre l'élément de fixation (454) et le corps de base (430), ce volume étant lui-même relié au réservoir (12) par une ouverture (486) dans le corps de base (430).
